# EUROPEAN PATENT SPECIFICATION

(11) **EP 1 093 440 B1**
(45) Date of publication and mention of the grant of the patent: **18.08.2004**
(21) Application number: 99930100.5
(22) Date of filing: 11.06.1999
(51) Int. Cl.: C02F 1/28, C02F 1/40, B01D 24/12

(54) **DEVICE FOR PURIFYING WATER**
VORRICHTUNG ZUR REINIGUNG VON WASSER
DISPOSITIF DE PURIFICATION DE L'EAU

(30) Priority: 11.06.1998 SE 9802062
(43) Date of publication of application: 25.04.2001
(73) Proprietor: Axelsson, Per, 733 91 Sala (SE)
(72) Inventor: Axelsson, Per, 733 91 Sala (SE)
(74) Representative: Reyier, Ann-Mari
(86) International application number: PCT/SE1999/001027
(87) International publication number: WO 1999/067175

(56) References cited:
- NO-B- 136 294
- NO-B1- 304 148
- SE-C- 11 151
- US-A- 5 178 769
- DATABASE WPI Week 9203, Derwent Publications Ltd., London, GB; AN 1992-022455/03, XP002938203 & SU 1 627 520 A (BELYAVSKII V II) 15 February 1992

## Description

### FIELD OF THE INVENTION

The present invention is related to a device for purifying rain or ground water contaminated with liquid organic compounds.

### PRIOR ART

Different devices for purifying rain or ground water contaminated with liquid organic compounds are known and it is well known that discharge of such non-purified water is hazardous for the environment.

It is known to pass such contaminated water through an absorbent, in which diesel oil, etc. is absorbed, but the known methods are relatively uneconomical due to the fact that only small amounts of the absorbent is utilised, and the known methods are often too complicated.

The Derwent abstract SU-1627520-A discloses a purifying arrangement for a liquid, comprising an upright container in which a plurality of layers comprising an absorbent, are located on top of each other and separated by bottoms, which are perforated over the cross-section. The bottoms of the device are joined with a wall in the upright container.

The document SE-C-11151 discloses a purifying arrangement for a liquid, comprising an outer container and a removable inner container arranged in the outer container. The inner container comprises a first perforated bottom and two layers of an absorbent, located on top of each other and separated by a second perforated bottom. The perforated bottoms are joined with a wall of the inner container.

### THE INVENTION

The purpose of the invention is to solve these and other closely related problems. This solution is achived with a device as described in claim 1. According to an embodiment of the invention the water mixture is discharged from a collecting vessel to a purifying container comprising a number of plate-shaped bodies, which comprise an absorbent, for example peat, said bodies being located on top of each other and separated by layers (bottoms) of plastic, such as HDPE, perforated over the cross-section, in order to spread the fluid to be purified over the entire absorbent/peat surface, wherein a diesel/organic dissolvent is absorbed and the rain/ground water is led further.

This method is easy and very effective. The absorbent in each layer is effectively utilised by spreading the fluid, and an effective 100 % purifying is effected in an environmentally good way by choosing several layers separated by these spreading members.

The device comprises a collecting vessel for the contaminated water, which is connected to a purifying arrangement comprising a number of layers containing an absorbent, for example peat, which are located on top of each other and separated by bottoms of plastic, such as HDPE or a similar material, which are perforated over the cross-section in order to spread the passing fluid, wherein diesel or the organic dissolvent is absorbed and the fluid mainly comprises water after passage.

Such a device is easy to mount, takes up little space, and the layers with the absorbent may easily be changed after the used absorbent is fully contaminated with diesel oil, etc.

According to a preferred embodiment, the side-walls of the purifying layers are formed by non-perforated plastic, such as HOPE, which side-walls are joined with the perforated bottoms to a container for each purifying layer. The side-walls are continuous. Such absorbent containers are open upwards. A plurality of such absorbent containers, or bowls, are piled on top of each other. According to a preferred embodiment, a purifying unit comprising a plurality of such piled absorbent containers is arranged in a container member, such as a sack, preferably formed by a textile material, which is insertable into and exertable out of a larger, upright container. The sack is exerted out of the upright container when the absorbent is saturated with diesel oil, etc., and a new such sack comprising a purifying unit with an unsaturated absorbent is inserted into the container. Such filled sacks may easily be put in order and transported, if needed.

### THE DRAWINGS

The invention is exemplified in the attached drawings.
- Fig. 1: illustrates a device according to the invention, and
- fig. 2: is a more detailed figure of the device according to the invention.

### EMBODIMENT EXAMPLES

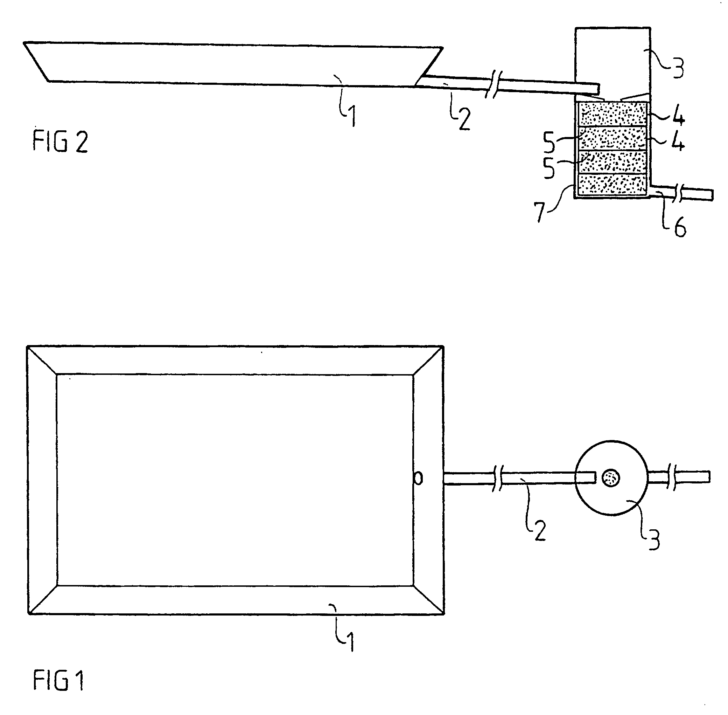

Figure 1 shows a collecting vessel 1 for rain or ground water contaminated with liquid organic compounds, which vessel is connected to the purifying device 3 with a tube 2. The term organic liquid compounds comprises dispersed and/or dissolved organic compounds. The term organic compounds comprises hydrocarbons in the form of different types of oils, such as diesel, petrol, and organic dissolvents. The collecting vessel 1 is formed as a trough, which has a surface large enough for collecting the actual contaminated water.

Figure 2 illustrates the same collecting vessel 1 in a side-view, and its tube connection 2 to the purifying device 3.

The purifying device 3 comprises an outer vessel 7 of plastic or metal. A number of layers 4 comprising an absorbent, such as peat, are inserted into the outer vessel. The contaminants, such as diesel oil, or organic dissolvents, are absorbed in this material (the filter mass). The material is usable for all different types of such dissolvents, wherein the absorption will be completed after passage of the purifying arrangement. The mass (absorbent) may be formed by pressed and heated peat, preferably in the form of granulates.

The different layers are separated by plastic, such as HDPE, perforated over the entire cross-section. These bottoms with perforations 5 serve as spreading members in order to distribute the fluid over the entire absorbent cross-section and thus effectively utilise the entire absorbent mass. This purifying or filtering device may be comprised by any number of separate layers. Side-walls to the layers may be formed by plastic, which will not let water through, such as HDPE. These side-walls are joined with each of the perforated bottoms 5 to containers, or bowls, each of which encloses the absorbent and forms a layer 4. A purifying unit comprising a plurality of such piled layers 4, may easily be placed down into the outer container 7. A purifying unit comprising four layers 4 is shown in figure 2, but the number of layers may be determined by the need. The effectively purified water is discharged in the bottom of the purifier at 6.

The aim of the method utilising the device according to the invention is to collect contaminated water, for instance comprising diesel oil or organic dissolvents, in the collecting vessel, and thereafter discharge the water through the tube 2 to the purifying (filter) device 3 with its four layers 4 with absorbents, which are located on top of each other. Substantially all present dissolvent will be absorbed in the device. The fluid is spread over the entire absorbent cross-section through the bottoms and the absorbent mass is effectively utilised. The purified water is drinkable.

The invention may be varied within the scope of the claims below.

Thus, the contaminated water is moved downwards through the absorbent layers by means of the gravity force.

## Claims

1. A device for purifying rain or ground water contaminated with liquid organic compounds, wherein t he device comprises a collecting vessel (1) for contaminated water, which vessel is connected to a purifying arrangement (3) comprising an up right container (7) in which a plurality of layers (4) comprising an absorbent, are located on top of each other and separated by bottoms (5), which are perforated over the cross-section in order to spread the passing fluid, wherein said liquid organic compounds are absorbed, and the fluid mainly comprises water after passage, **characterised in that** each of the perforated bottoms (5) is joined with side-walls to form an absorbent receptacle f or e ach layer (4), a plurality of said absorbent receptacles are piled on top of each other in said upright container, and said plurality of piled absorbent receptacles are arranged insertable into and exertable out of said upright container (7).

2. A device according to claim 1, **characterised in that** said plurality of piled absorbent receptacles are arranged in a container member, which is insertable into and exertable out of said upright container (7).

3. A device according to claim 2, **characterised in that** said container member is formed in a textile material.

4. A device according to any of the previous claims, **characterised in that** the upright container (7) comprises an inlet for insertion of the contaminated rain or ground water at an upper end of the container, and an outlet for discharge of purified rain or ground water at a lower end of the container.

5. A device according to any of the previous claims, **characterised in that** the upright container (7) is formed by a plastic or metal container containing the absorbent layers enclosed in plastic.

6. A device according to any of the previous claims, **characterised in that** the perforated bottoms comprise a polymer material, such as HDPE.

7. A device according to any of the previous claims, **characterised in that** the absorbent is peat.

8. A device a ccording to any of the previous claims, **characterised in that** the device comprises a collecting vessel (1) for contaminated water, which vessel is connected to one single purifying unit (3) comprising layers (4), which comprise peat as an absorbent, said layers being located on top of each other and separated by bottoms of a plastic material (5), which are perforated over the cross-section in order to spread the passing fluid, wherein the diesel is absorbed, and the fluid mainly comprises water after passage, and each of the perforated bottoms (5) is joined with side-walls, formed by non-perforated plastic, to an absorbent receptacle for each layer (4).

## Patentansprüche

1. Eine Vorrichtung zum Reinigen von Regen- oder Grundwasser, das mit flüssigen organischen Verbindungen verunreinigt ist, wobei die Vorrichtung einen Sammelbehälter (1) für verunreinigtes Wasser umfasst, wobei der Behälter mit einer Reinigungsanordnung (3) verbunden ist, die einen aufrecht stehenden Behälter (7) umfasst, in dem eine Mehrzahl von Schichten (4), die ein Absorptionsmittel umfassen, übereinander angeordnet und durch Böden (5) getrennt ist, die auf dem Querschnitt perforiert sind, um das hindurchtretende Fluid zu verteilen, wobei die flüssigen organischen Verbindungen absorbiert werden und das Fluid nach dem Hindurchtreten vorwiegend Wasser umfasst, **dadurch gekennzeichnet, dass** jeder der perforierten Böden (5) mit Seitenwänden zur Bildung eines Absorptionsmittel-Aufnahmebehälters für jede Schicht (4) verbunden ist, eine Mehrzahl der Absorptionsmittel-Aufnahmebehälter in dem aufrecht stehenden Behälter übereinander gestapelt ist, und die Mehrzahl von gestapelten Absorptionsmittel-Aufnahmebehältern so angeordnet ist, dass sie in den aufrecht stehenden Behälter (7) einsetzbar und aus diesem herausnehmbar ist.

2. Vorrichtung nach Anspruch 1, **dadurch gekennzeichnet, dass** die Mehrzahl der gestapelten Absorptionsmittel-Aufnahmebehälter in einem Behälterelement angeordnet ist, das in den aufrecht stehenden Behälter (7) einsetzbar und aus diesem herausnehmbar ist.

3. Vorrichtung nach Anspruch 2, **dadurch gekennzeichnet, dass** das Behälterelement aus einem Textilmaterial ausgebildet ist.

4. Vorrichtung nach einem der vorstehenden Ansprüche, **dadurch gekennzeichnet, dass** der aufrecht stehende Behälter (7) einen Einlass zum Einbringen des verunreinigten Regenoder Grundwassers an einem oberen Ende des Behälters und einen Auslass zum Abgeben des gereinigten Regen- oder Grundwassers an einem unteren Ende des Behälters umfasst.

5. Vorrichtung nach einem der vorstehenden Ansprüche, **dadurch gekennzeichnet, dass** der aufrecht stehende Behälter (7) aus einem Kunststoff- oder Metallbehälter ausgebildet ist, der die von einem Kunststoff umschlossenen Absorptionsmittelschichten enthält.

6. Vorrichtung nach einem der vorstehenden Ansprüche, **dadurch gekennzeichnet, dass** die perforierten Böden ein Polymermaterial wie z.B. HDPE umfassen.

7. Vorrichtung nach einem der vorstehenden Ansprüche, **dadurch gekennzeichnet, dass** das Absorptionsmittel Torf ist.

8. Vorrichtung nach einem der vorstehenden Ansprüche, **dadurch gekennzeichnet, dass** die Vorrichtung einen Sammelbehälter (1) für verunreinigtes Wasser umfasst, wobei der Behälter mit einer einzelnen Reinigungsheit (3) verbunden ist, die Schichten (4) umfasst, die Torf als Absorptionsmittel umfassen, wobei die Schichten übereinander angeordnet und durch Böden aus einem Kunststoffmaterial (5) getrennt sind, die auf dem Querschnitt perforiert sind, um das hindurchtretende Fluid zu verteilen, wobei Diesel absorbiert wird und das Fluid nach dem Hindurchtreten vorwiegend Wasser umfasst, und jeder der perforierten Böden (5) mit Seitenwänden, die aus einem nicht-perforierten Kunststoff ausgebildet sind, mit einem Absorptionsmittel-Aufnahmebehälter für jede Schicht (4) verbunden ist.

## Revendications

1. Dispositif destiné à purifier l'eau de pluie ou la nappe phréatique contaminée par des composés organiques liquides, dans lequel le dispositif comprend une cuve collectrice (1) destinée à l'eau contaminée, laquelle cuve est raccordée à un agencement de purification (3) comprenant un récipient vertical (7) dans lequel plusieurs couches (4) comprenant un matériau absorbant sont situées les unes au-dessus des autres et séparées par des fonds (5) qui sont perforés sur la section transversale afin de disperser le liquide passant, dans lequel lesdits composés organiques liquides sont absorbés et le liquide comprend principalement de l'eau après passage, **caractérisé en ce que** chacun des fonds perforés (5) est réuni par des parois latérales pour former un réceptacle absorbant pour chaque couche (4), plusieurs desdits réceptacles absorbants sont empilés les uns au-dessus des autres dans ledit récipient vertical, et lesdits plusieurs réceptacles absorbants empilés sont agencés de manière à pouvoir être insérés dans et à pouvoir être sortis dudit récipient vertical (7).

2. Dispositif selon la revendication 1, **caractérisé en ce que** lesdits plusieurs réceptacles absorbants empilés sont agencés dans un élément de récipient, qui peut être inséré dans et qui peut être sorti dudit récipient vertical (7).

3. Dispositif selon la revendication 2, **caractérisé en ce que** ledit élément de récipient est formé dans un matériau textile.

4. Dispositif selon l'une quelconque des revendications précédentes, **caractérisé en ce que** le récipient vertical (7) comprend une admission pour l'insertion de l'eau de pluie ou de la nappe phréatique contaminée au niveau d'une extrémité supérieure du récipient, et une sortie pour décharger l'eau de pluie ou la nappe phréatique purifiée au niveau d'une extrémité inférieure du récipient.

5. Dispositif selon l'une quelconque des revendications précédentes, **caractérisé en ce que** le récipient vertical (7) est formé par un récipient en plastique ou en métal contenant les couches absorbantes incluses dans du plastique.

6. Dispositif selon l'une quelconque des revendications précédentes, **caractérisé en ce que** les fonds perforés comprennent un matériau polymère, comme le HDPE.

7. Dispositif selon l'une quelconque des revendications précédentes, **caractérisé en ce que** le matériau absorbant est de la tourbe.

8. Dispositif selon l'une quelconque des revendications précédentes, **caractérisé en ce que** le dispositif comprend une cuve collectrice (1) destinée à l'eau contaminée, laquelle cuve est raccordée à une unité de purification unique (3) comprenant des couches (4), qui comprennent de la tourbe en tant que matériau absorbant, lesdites couches étant situées les unes au-dessus des autres et séparées par des fonds en matière plastique (5), qui sont perforés sur la section transversale afin de disperser le liquide passant, où le carburant diesel est absorbé, et le liquide comprend principalement de l'eau après passage, et chacun des fonds perforés (5) est réuni par des parois latérales, formées par un plastique non perforé, à un réceptacle absorbant pour chaque couche (4).
